# EUROPEAN PATENT SPECIFICATION

(11) **EP 3 870 503 B1**
(45) Date of publication and mention of the grant of the patent: **14.08.2024**
(21) Application number: 19805388.6
(22) Date of filing: 23.10.2019
(51) Int. Cl.: B62K 11/14, B62K 21/12, B62K 21/18, B62K 5/027

(54) **VEHICLE COMPRISING A STEERING ASSEMBLY**
FAHRZEUG MIT EINER LENKANORDNUNG
VÉHICULE COMPRENANT UN ENSEMBLE DE DIRECTION

(30) Priority: 25.10.2018 IT 201800009770
(43) Date of publication of application: 01.09.2021
(73) Proprietor: Piaggio & C. SpA, 56025 Pontedera (Pisa) (IT)
(72) Inventor: MARANO, Luca, 56025 Pontedera (Pisa) (IT); TAVIANI, Alessandro, 56025 Pontedera (Pisa) (IT)
(74) Representative: Pipoli, Massimo
(86) International application number: PCT/IB2019/059045
(87) International publication number: WO 2020/084505

(56) References cited:
- WO-A1-2014/083481
- WO-A2-00/03913
- DE-U1- 202004 017 903
- JP-A- 2008 279 923
- JP-A- H0 585 459
- US-A1- 2014 015 219

## Description

The present invention relates to a steering assembly for a vehicle.

In certain types of known vehicles, in particular but not exclusively in vehicles provided with a steering handlebar in which the driving position of the driver is very close to the handlebar, the drawback exists that the part of the handlebar which moves toward the driver during the steering step hits a part of the driver's body. This results in a worsening of the driving comfort and may also increase the risk of accidents. The vehicle type of claim 1 is known, for example from the Piaggio Ape model year 2017. This vehicle has however a different steering assembly than specified in claim 1. Document WO 2014/083481 A1 discloses a steering assembly according to claim 1, however in a different vehicle than specified in claim 1.

It is a general object of the present invention to provide a steering assembly in a vehicle which allows the above-mentioned drawbacks with reference to the known art to be resolved or at least partly obviated.

These and other objects are achieved by means of a vehicle comprising a steering assembly as defined in claim 1 in the most general embodiment thereof, and in the claims dependent thereon in certain particular embodiments thereof.

A more complete appreciation of the embodiments of the invention and the related associated advantages will be apparent from the following detailed disclosure, to be considered in connection with the accompanying drawings, in which:
- Fig. 1 shows a perspective view of a vehicle transparently showing a steering assembly according to a preferred embodiment of the present invention;
- Fig. 2 shows an almost flat axonometric diagrammatic top view in which the steering assembly of Fig. 1 is shown, where the steering assembly in particular is depicted in a first configuration and where the legs of a driver of the vehicle in Fig. 1 are also depicted;
- Fig. 3 shows an almost flat axonometric diagrammatic top view similar to Fig. 2, in which the steering assembly is depicted with dotted lines in the first configuration in Fig. 2 and with a continuous line in a second configuration;
- Fig. 4 shows an almost flat axonometric diagrammatic top view similar to Fig. 2, in which the steering assembly is depicted with dotted lines in the first configuration in Fig. 2 and with a continuous line in a third configuration;
- Fig. 5 shows an almost flat axonometric diagrammatic top view similar to Fig. 2, in which continuous lines depict the steering assembly in the second configuration in Fig. 3 and dotted lines depict a known handlebar in a configuration similar to the second configuration of the steering assembly in Fig. 2;
- Fig. 6 shows an almost flat diagrammatic top view in which a further embodiment of a steering assembly according to the present invention is shown in a first configuration similar to the first configuration of the steering assembly in Fig. 2.

The following description of one or more embodiments of the invention relates to the accompanying drawings. The same numerals in the drawings identify equal or similar elements. The drawings are not necessarily depicted to scale. Moreover, the following detailed description should not be considered limiting to the invention itself. The invention is defined by the appended claims. The technical details, structures or features of the solutions hereinafter described may be combined with one another in any manner, unless it is not expressly indicated that certain features or solutions are alternative to one another or it is not apparent from the description which follows that two or more features or embodiments are incompatible with one another.

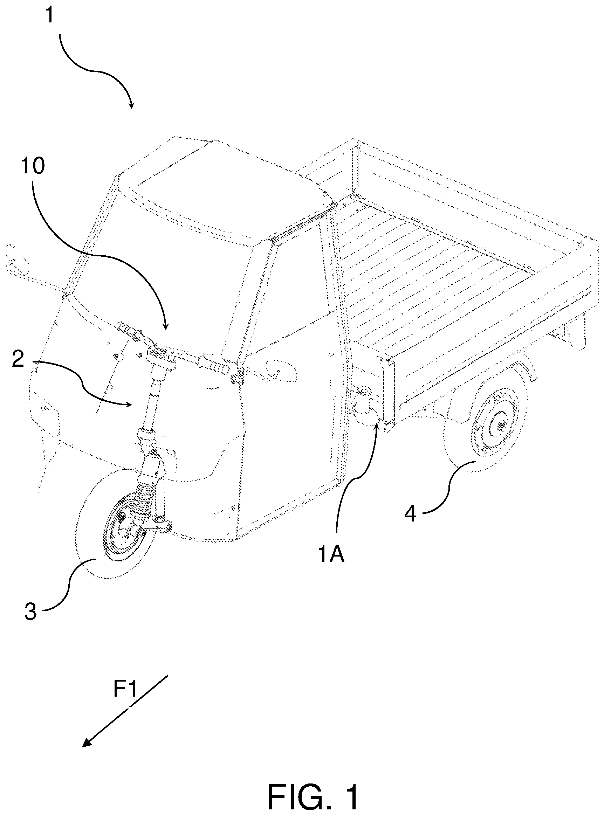

With reference to Fig. 1, a vehicle is indicated as a whole with numeral 1. According to one embodiment, vehicle 1 is a three-wheel vehicle 3, 4, designed to transport objects and/or people. Vehicle 1 in particular comprises a front steered wheel 3 and a pair of rear wheels 4, only one of which is shown in Fig. 1. According to one embodiment, vehicle 1 is a motor vehicle with three wheels 3, 4 which are symmetrical with respect to the median longitudinal axis of vehicle 1. According to one embodiment, vehicle 1 is a vehicle classified in category L2 (i.e. three-wheel vehicles having a maximum design speed not greater than 45 km/h and which capacity is less than or equal to 50cm³ if it has a spark ignition, or which maximum net power is less than or equal to 4 kW for the other internal combustion engines, or which maximum continuous power rating is less than or equal to 4 kW for electric motors) or in category L5 (i.e. vehicles with three wheels which are symmetrical with respect to the median longitudinal axis, the capacity of which engine - if it is a combustion engine - exceeds 50cm³ and/or which maximum design speed exceeds 45 km/h, whatever the propulsion system). According to a preferred embodiment, vehicle 1 is a vehicle of the type marketed by the Applicant under the trade name "Ape" in any one of the respective variants. Vehicle 1 comprises a steering column 2 connected to the front steered wheel 3 and a steering assembly 10 operatively connected to the steering column 2. In this regard, it is worth noting that for the purposes of the present description, the term "steering column" is to be interpreted in a general sense so as to comprise, according to the particular type of vehicle to which the teachings of the present invention are applied, any rigid elongated element adapted to be operatively interposed between a steering member and at least one steered wheel of the vehicle (or other functionally similar front steered element, as is described later) in order to transfer a steering force from the steering member to the aforesaid at least one steered wheel. For example, and however without any limitation, for the purposes of the present description, the term "steering column" may also be interpreted so as to refer to a steering column tube of a vehicle.

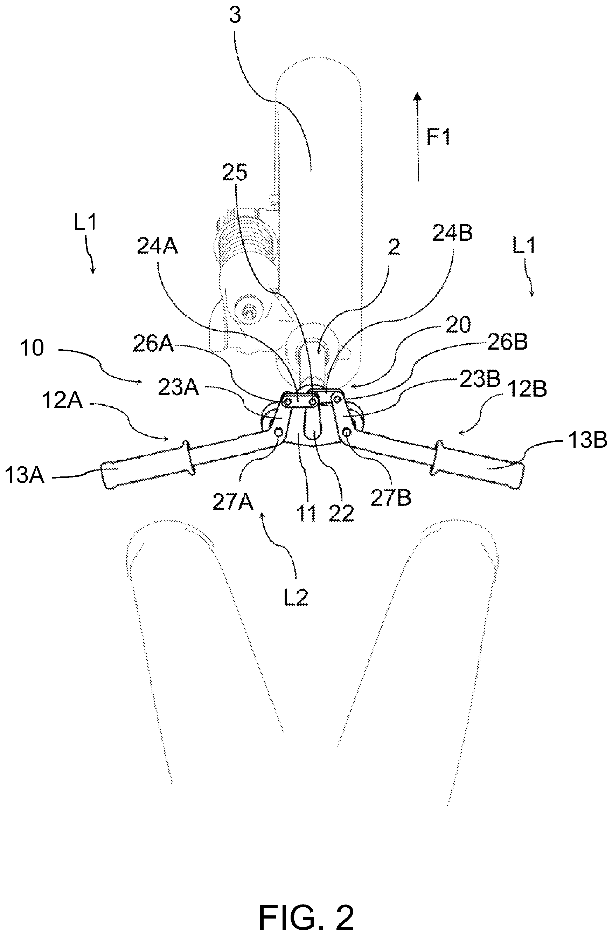

With reference to Fig. 2, the steering assembly 10 is depicted in a respective neutral configuration corresponding to a non-steered state of the steering assembly 10. In other words, in the absence of external forces, vehicle 1 travels a straight line in the neutral configuration of the steering assembly 10. In other words, the neutral configuration of the steering assembly 10 corresponds to a non-steered state of the front steered wheel 3. According to one embodiment, in the non-steered state of the front steered wheel 3, when the steering assembly 10 takes on the neutral configuration, the front steered wheel 3 is arranged so that the median vertical plane of the steered wheel 3 coincides with or is parallel to the median vertical longitudinal plane of vehicle 1. According to an alternative embodiment, if vehicle 1 in particular were a vehicle provided with a plurality of front steered wheels 3, the front steered wheels 3 in the neutral configuration of the steering assembly 10 could also have such a small camber or semi toe-in angle in any case as to allow vehicle 1 to travel a straight line in the absence of external forces.

Again with reference to Fig. 2, the steering assembly 10 comprises:
- a support element 11;
- a first and a second steering member 12A, 12B each independently (i.e., individually) and movably connected to the support element 11; and
- a transmission mechanism 20 operatively interposed between the first and second steering member 12A, 12B and adapted to be connected to the steering column 2. The support element 11 is fixed to the frame 1A of vehicle 1. In other words, the support element 11 may be stably, also removably, connected to frame 1A or it may be integral with frame 1A.

The first and second steering members 12A, 12B comprise a first and a second handle portion 13A, 13B, respectively. According to one embodiment, the handle portions 13A, 13B comprise a first and second handgrip 13A, 13B, respectively. The transmission mechanism 20 is configured so as to impose a different law of motion on the first and second steering member 12A, 12B, respectively.

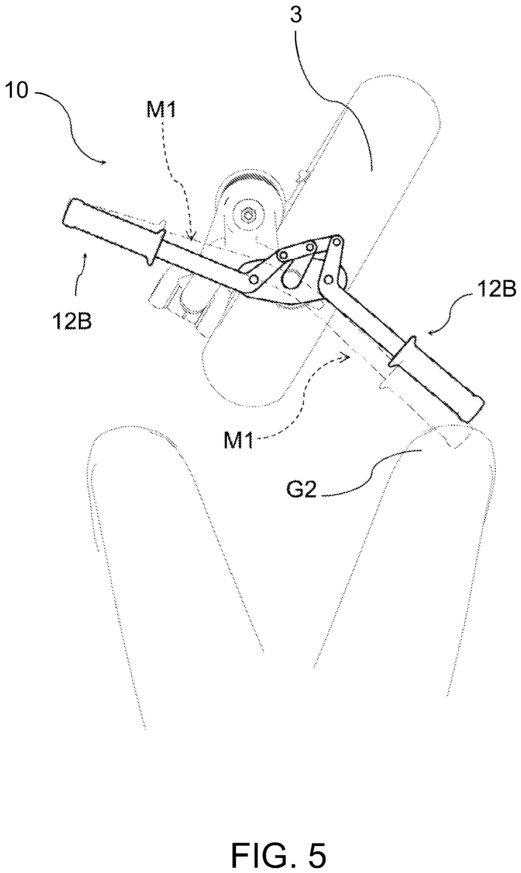

It is worth noting that the fact of providing a first and a second steering member 12A, 12B connected to the support element 11 and the fact of providing the transmission mechanism 20 operatively interposed between such members 12A, 12B advantageously allows to vary the plane on which the steering members 12A, 12B move, and accordingly the ergonomics of the steering assembly 10 to be improved. Moreover, the fact of providing a transmission mechanism 20 which is configured so as to impose a different law of motion on the first and second steering member 12A, 12B, respectively, advantageously allows the first or the second steering member 12A, 12B to avoid hitting a part of the body of the driver during the steering step. In this regard, with reference to Fig. 5, the steering assembly 10 is depicted with continuous lines in a configuration steered completely to the right. Again in Fig. 5, dotted lines depict a traditional handlebar M1, it also being in a configuration steered completely to the right. As is shown in Fig. 5, in the aforesaid completely steered configurations of assembly 10 and handlebar M1, the second steering member 12B does not hit leg G2 of the driver of vehicle 1, while the traditional handlebar M1 hits leg G2 of the driver. It is worth noting that the traditional handlebar M1 corresponds to a straight or slightly arched rod connected orthogonally to the steering column.

It is worth noting that the teachings of the present invention are not limited to the three-wheel vehicle 1 of the above-described type. According to the invention the vehicle is provided with a drive/propulsion system with internal combustion engine or with an electric or hybrid drive/propulsion system, comprising:
- a frame 1A; and
- at least one front steered wheel 3.

For example, and however without any limitation, the teachings of the present invention may also be applied to motorcycles (scooters) with three or more wheels, ATVs - all terrain vehicles (quadricycles, tricycles), QUADs, etc.

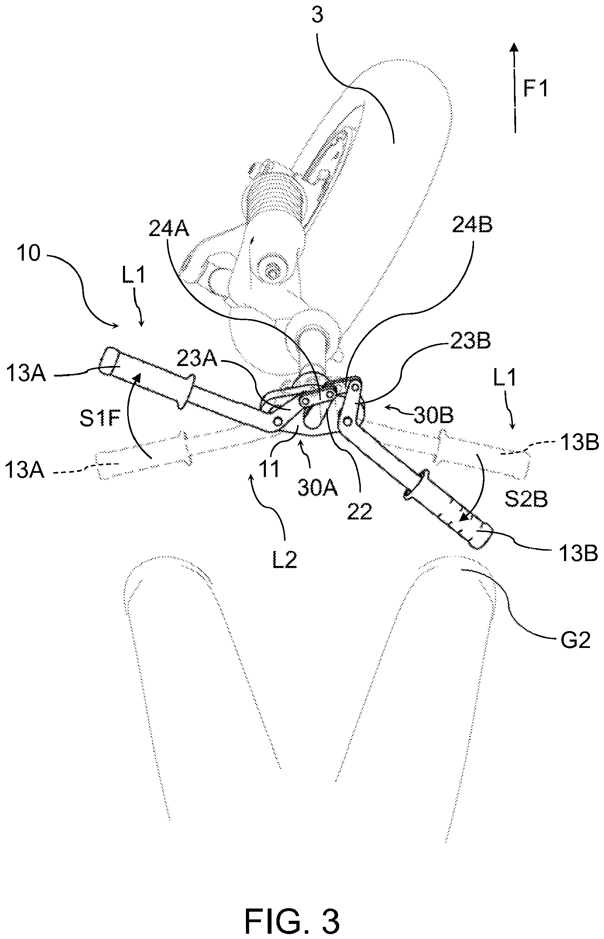

With reference to Fig. 3, assembly 10 is depicted with continuous lines in a first completely steered configuration. In the example in Fig. 3, assembly 10 in particular is completely steered to the right. Again with reference to Fig. 3, dotted lines depict the first and second steering member 12A, 12B in the neutral configuration (Fig. 2) of assembly 10.

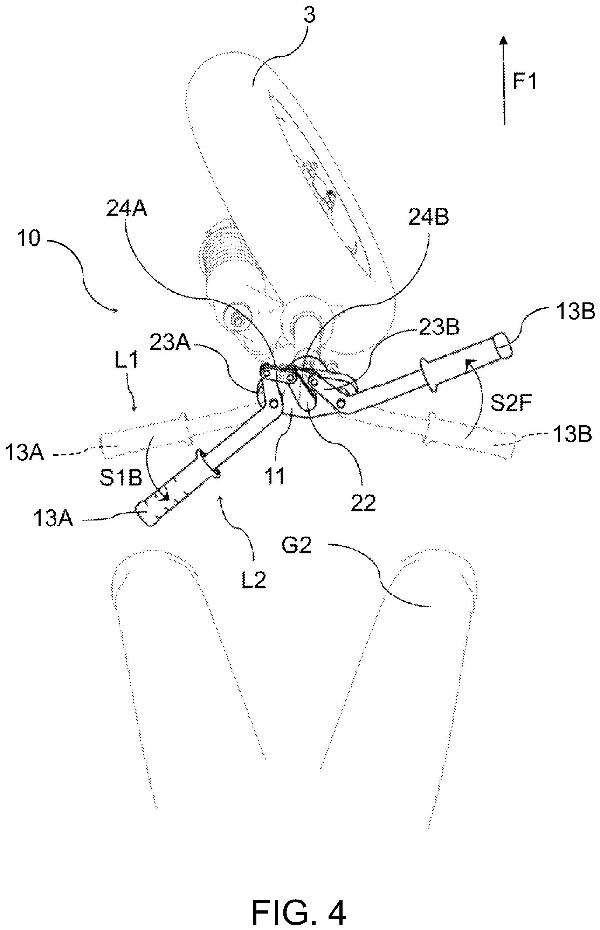

With reference to Fig. 4, assembly 10 is depicted with continuous lines in a second completely steered configuration. In the example in Fig. 4, assembly 10 in particular is completely steered to the left. Again with reference to Fig. 4, dotted lines depict the first and second steering member 12A, 12B in the neutral configuration (Fig. 2) of assembly 10.

Returning to Fig. 3, according to the invention, following a first shift S1F of the first handle portion 13A towards a first side L1 of the steering assembly 10, the transmission mechanism 20 imposes a second shift S2B of the second handle portion 13B towards a second side L2 of the steering assembly 10 which is opposite to the first side (L1). Vice versa with reference to Fig. 4, it is worth noting that following a first shift S2F of the second handle portion 13B towards the first side L1 of the steering assembly 10, the transmission mechanism 20 imposes a second shift S1B of the first handle portion 13A towards the second side L2. The first shifts S1F, S2F according to the invention are greater than the second shifts S1B, S2B. In other words, the first shift S1F of the first handle portion 13A is greater than the second shift S2B of the second handle portion 13B, while the first shift S2F of the second handle portion 13B is greater than the second shift S1B of the first handle portion 13A. It is worth noting that in the accompanying drawings, the shifts S1F and S1B are the shifts of the middle of the first handle portion 13A from the neutral configuration of assembly 10, while the shifts S2F, S2B are the shifts of the middle of the second handle portion 13B from the neutral configuration of assembly 10.

According to one embodiment, with respect to the forward travel direction of vehicle 1 (such a direction is indicated by arrow F1 in the drawings), each of the aforesaid first shifts S1F, S2F is a forward shift and each of the aforesaid second shifts S1B, S2B is a backward shift.

According to one embodiment, the first and second steering members 12A, 12B are connected to the support element 11 through respective hinges 27A, 27B and the transmission mechanism 20 is configured so to impose a different rotation of first steering member 12A with respect to the second steering member 12B about the axes of the respective hinges 27A, 27B. According to one embodiment, the hinges 27A, 27B comprise revolute pairs 27A, 27B.

According to one embodiment, the first and second steering members 12A, 12B comprise a first and a second half-handlebar 12A, 12B rotatably connected to the support element 11, respectively. It is worth noting that the teachings of the present description are not limited to a first and second handlebar, but may in general be applied to a first and second steering member 12A, 12B of any type. For example, the first and second steering members 12A, 12B may in general comprise a first and second lever 12A, 12B, each of which may rotate about a respective rotation axis. Such rotation axes in particular may lie on a horizontal plane or a vertical plane or on any other plane. More in general again, according to one embodiment, the first and second steering members 12A, 12B may be steering members connected to the support element 11 so as to carry out a translational motion rather than a rotary motion.

According to one embodiment, mechanism 20 comprises a first and a second articulated quadrilateral 30A, 30B which are connected to the first and second steering member 12A, 12B, respectively.

According to one embodiment, the first articulated quadrilateral 30A comprises a first rocker arm 22 configured to be connectable to the steering column 2, a second rocker arm 23A rigidly connected to the first half-handlebar 12A and a connecting rod 24A connected to the first rocker arm 22 and second rocker arm 23A. The first rocker arm 22 and the second rocker arm 23A are also connected to each other by means of the support element 11. Again according to such an embodiment, the second articulated quadrilateral 30B comprises the first rocker arm 22, a second rocker arm 22B rigidly connected to the second half-handlebar 12B and a connecting rod 24B connected to the first rocker arm 22 and second rocker arm 23B. The first rocker arm 22 and the second rocker arm 23B are also connected to each other by means of the support element 11. According to one embodiment, the second rocker arm 23A and the second rocker arm 23B are rigidly connected, or more preferably made, in a single piece with the first and second steering member 12A, 12B, respectively.

According to one embodiment, the second rocker arms 23A, 23B have a different length with respect to the first rocker arm 22. According to one embodiment, the second rocker arms 23A, 23B are longer than the first rocker arm 22. Advantageously, thereby the offset may be achieved between the first and second steering member 12A, 12B, which allows to ensure the above-mentioned shifts S1F and S2F are greater than the shifts S2B and S1B, respectively.

According to one embodiment, the connecting rods 24A, 24B of the first and second articulated quadrilateral 30A, 30B are connected to the first rocker arm 22 and to the respective second rocker arm 23A, 23B by means of revolute pairs and/or spherical joints 25, 26A, 26B. In other words, according to one embodiment, the couplings 25, 26A, 26B could in general all be revolute pairs 25, 26A, 26B, for example made by pivoting the connecting rods 24A, 24B to the first rocker arm 22 and second rocker arms 23A, 23B. According to an alternative embodiment, the couplings 25, 26A, 26B could all be spherical joints 25, 26A, 26B. According to a further embodiment, the couplings 25, 26A, 26B could be partly revolute pairs and partly spherical joints. According to one embodiment, the first and second steering members 12A, 12B are each connected to the support element 11 by means of a respective revolute pair 27A, 27B. In such a case, the first and second steering members 12A, 12B may for example, be pivoted to the support element 11 by means of respective pins 27A, 27B. Clearly, if the first and second member 12A, 12B are pivoted to the support element 11, the aforesaid shifts S1F, S1B, S2F, S2B are arcs of circumference lying on planes orthogonal to the rotation axes of the first and second member 12A, 12B, respectively, i.e. planes orthogonal to the axes of the pins 27A, 27B.

According to one embodiment, the connecting rods 24A, 24B of the first and second articulated quadrilateral 30A, 30B are connected to the first rocker arm 22 in a same point, as shown for example, in Figures 2 to 5.

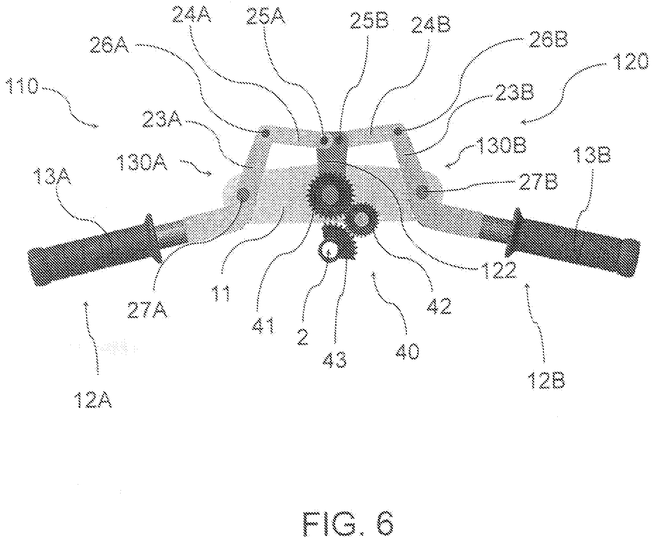

With reference to Fig. 6, it shows a steering assembly according to a further embodiment, which is indicated as a whole with numeral 110. The steering assembly 110 comprises a transmission mechanism 120 including a first and a second articulated quadrilateral 130A, 130B which are connected to the first and second steering member 12A, 12B, respectively. The steering assembly 110 has only two main differences with respect to the steering assembly 10 shown in Figures 1 to 5. The first difference in particular is that the first and second articulated quadrilateral 130A, 130B comprise a first rocker arm 122 which differs from the first rocker arm 22 of assembly 10 in that it is configured so as to allow a slightly different connection of the connecting rods 24A, 24B. In other words, as shown in Fig. 6, the connecting rods 24A, 24B of the first and second articulated quadrilateral 130A, 130B are connected to the first rocker arm 122 at two distinct points. According to one embodiment in particular, the connecting rods 24A, 24B of the first and second articulated quadrilateral 130A, 130B are connected to the first rocker arm 122 by means of two respective revolute pairs 25A, 25B or more preferably, two respective spherical joints 25A, 25B. This advantageously allows the connecting rods 24A, 24B to be connected to the first rocker arm 122 so as to be mutually coplanar and accordingly to reduce the overall volume of the steering assembly 110. Moreover, the fact of connecting the connecting rods 24A, 24B to the first rocker arm 122 in two distinct points advantageously allows to maximize the difference between the shifts S1F and S2F and the shifts S2B and S1B, respectively, thus introducing a further non-linearity due to the distance between the aforesaid two distinct connecting points which in the example, correspond in a non-limiting manner to the two couplings 25A and 25B.

The second difference between assembly 110 and assembly 10 is that mechanism 120 comprises a gear reduction unit 40 configured to transmit the movement of the first rocker arm 122 to the steering column 2. This advantageously allows a unitary transmission ratio to be kept at least in the configurations which are completely steered to the left or right of the steering assembly 110 (such configurations of assembly 110 are not depicted but correspond to the configurations in Fig. 3 and Fig. 4, respectively, related to the steering assembly 10). In other words, with reference to the embodiment in Fig. 6, supposing that from the neutral configuration in Fig. 6, assembly 110 takes on a configuration which is completely steered to the right, if during the passage from the neutral configuration to the configuration completely steered to the right the first steering member 12A rotates by a first angle, for example an angle of 30°, then also the front steered wheel 3 will rotate by an angle equal to said first angle, and therefore in the example at hand by an angle of 30°, due to the gear reduction unit 40. It is indeed worth noting that as the difference increases between the shifts S1F and S2B and between the shifts S2F and S1B, the total transmission ratio which is to be restored by means of a gear reduction unit, is altered. According to a preferred embodiment, gear reduction unit 40 comprises a plurality of gears 41 to 43, preferably including an idle toothed wheel 42.

Apart from the two differences described above, the steering assembly 110 is identical or substantially identical to assembly 10. Thus, for the purposes of brevity of the present description, assembly 110 will not be further described in detail.

It is in any case understood that as anticipated, the technical details, structures or features of the steering assembly 10 and of the steering assembly 110 may be combined with one another in any manner. Thus, assembly 10 may be modified for example, so as to replace the first rocker arm 22 with a rocker arm which is similar to the first rocker arm 122 and/or may comprise a gear reduction unit which is similar to gear reduction unit 40.

According to the above explanation, it may therefore be understood how a steering assembly according to the present description allows the above-mentioned objects to be achieved.

The invention being understood, the embodiments and manufacturing details may largely vary with respect to those described and disclosed by mere way of non-limiting example, without departing from the scope of the invention as defined in the appended claims.

## Claims

1. A vehicle (1) comprising a frame (1A), a front steered wheel (3) and a pair of rear wheels (4), with a drive/propulsion system with internal combustion engine or with an electric or hybrid drive/propulsion system, said vehicle (1) comprising a steering assembly (10) having a steering column (2), said steering assembly (10) comprising:
- a support element (11),
- a first and a second steering member (12A, 12B) each individually and movably connected to the support element (11), said first and second steering members (12A, 12B) comprising respectively a first and a second handle portion (13A, 13B);
- a transmission mechanism (20) operatively interposed between the first and second steering member (12A, 12B) and adapted to be connected to the steering column (2), wherein the transmission mechanism (20) is configured so as to impose a different law of motion on the first and second steering members (12A, 12B), respectively, wherein following a first shift (S1F) of the first handle portion (13A) towards a first side (L1) of the steering assembly (10), said transmission mechanism (20) imposes a second shift (S2B) of the second handle portion (13B) towards a second side (L2) of the steering assembly (10) opposite said first side (L1), and vice versa, following a first shift (S2F) of the second handle portion (13B) towards said first side (L1) of the steering assembly (10), said transmission mechanism (20) imposes a second shift (S1B) of the first handle portion (13A) towards said second side (L2), wherein the first shifts (S1F, S2F) are larger than said second shifts (S1B, S2B).

2. Vehicle (1) according to claim 1, wherein, with respect to the forward travel direction (F1) of the vehicle, each first shift (S1F, S2F) is a forward shift and each second shift (S1B, S2B) is a backward shift.

3. Vehicle (1) according to claim 1 or 2, wherein said first and second steering members (12A, 12B) comprise respectively a first and a second half-handlebar (12A, 12B) rotatably connected to said support element (11).

4. Vehicle (1) according to claim 3, wherein said mechanism (20) comprises a first and a second articulated quadrilateral (30A, 30B) connected respectively to the first and second half-handlebar (12A, 12B).

5. Vehicle (1) according to claim 4, wherein the first articulated quadrilateral (30A) comprises a first rocker arm (22) configured to be connectable to the steering column (2), a second rocker arm (23A) rigidly connected to the first half-handlebar (12A) and a connecting rod (24A) connected to the first rocker arm (22) and said second rocker arm (23A), the first rocker arm (22) and said second rocker arm (23A) being also connected to each other through the support element (11), and wherein the second articulated quadrilateral (30B) comprises said first rocker arm (22), a second rocker arm (22B) rigidly connected to the second half-handlebar (12B) and a connecting rod (24B) connected to the first rocker arm (22) and the second rocker arm (23B) of said second articulated quadrilateral (30B), the first rocker arm (22) and said second rocker arm (23B) of said second articulated quadrilateral (30B) being also connected to each other through the support element (11).

6. Vehicle (1) according to claim 5, wherein said second rocker arms (23A, 23B) have a different length compared to said first rocker arm (22).

7. Vehicle (1) according to claim 6, wherein said second rocker arms (23A, 23B) are longer than said first rocker arm (22).

8. Vehicle (1) according to claim 6 or 7, wherein the connecting rods (24A, 24B) of the first and second articulated quadrilaterals (30A, 30B) are connected to the first rocker arm (22) and the respective second rocker arm (23A, 23B) via spherical joints (25, 26A, 26B).

9. Vehicle (1) according to any of claims 6 to 8, wherein the connecting rods (24A, 24B) of said first and second articulated quadrilaterals (30A, 30B) are connected to the first rocker arm (22) at a same point (25).

10. Vehicle (1) )according to any of claims 6 to 8, wherein the connecting rods (24A, 24B) of said first and second articulated quadrilaterals (130A, 130B) are connected to the first rocker arm (122) at two distinct points (25A, 25B).

11. Vehicle (1) according to any of claims 5 to 10, wherein the said mechanism (120) comprises a gear reduction unit (40) configured to transmit the movement of the first rocker arm (122) to said steering column (2).

12. Vehicle (1) according to any one of the preceding claims, wherein said steering members (12A, 12B) are connected to the support element (11) through respective hinges (27A, 27B) and the transmission mechanism is configured so to impose a different rotation of first steering member (12A) with respect to the second steering member (12B) about the axes of the respective hinges (27A, 27B).

13. Vehicle (1) according to any of the preceding claims, wherein the support element (11) is fixed to the frame (1A) of the vehicle (1).

## Patentansprüche

1. Fahrzeug (1), das einen Rahmen (1A), ein gelenktes Vorderrad (3) und ein Paar Hinterräder (4) umfasst, mit einem Antriebs-/Vortriebssystem mit Verbrennungsmotor oder mit einem elektrischen oder hybriden Antriebs-/Vortriebssystem, wobei das Fahrzeug (1) eine Lenkbaugruppe (10) mit einer Lenksäule (2) umfasst, wobei die Lenkbaugruppe (10) umfasst:
- ein Trägerelement (11),
- ein erstes und ein zweites Lenkelement (12A, 12B), die jeweils einzeln und beweglich mit dem Trägerelement (11) verbunden sind, wobei das erste und das zweite Lenkelement (12A, 12B) jeweils einen ersten und einen zweiten Griffabschnitt (13A, 13B) umfassen;
- einen Übertragungsmechanismus (20), der operativ zwischen dem ersten und zweiten Lenkelement (12A, 12B) angeordnet ist und zur Verbindung mit der Lenksäule (2) geeignet ist, wobei der Übertragungsmechanismus (20) konfiguriert ist, um dem ersten und zweiten Lenkelement (12A, 12B) jeweils ein unterschiedliches Bewegungsgesetz aufzuerlegen, wobei nach einer ersten Verschiebung (S1F) des ersten Griffabschnitts (13A) in Richtung einer ersten Seite (L1) der Lenkanordnung (10) der Übertragungsmechanismus (20) eine zweite Verschiebung (S2B) des zweiten Griffabschnitts (13B) in Richtung einer zweiten Seite (L2) der Lenkanordnung (10) gegenüber der ersten Seite (L1) auferlegt, und umgekehrt, nach einer ersten Verschiebung (S2F) des zweiten Griffabschnitts (13B) in Richtung der ersten Seite (L1) der Lenkanordnung (10) der Übertragungsmechanismus (20) eine zweite Verschiebung (S1B) des ersten Griffabschnitts (13A) in Richtung der zweiten Seite (L2) auferlegt, wobei die ersten Verschiebungen (S1F, S2F) größer sind als die zweiten Verschiebungen (S1B, S2B).

2. Fahrzeug (1) nach Anspruch 1, wobei, bezogen auf die Vorwärtsfahrtrichtung (F1) des Fahrzeugs, jede erste Verschiebung (S1F, S2F) eine Vorwärtsverschiebung ist und jede zweite Verschiebung (S1B, S2B) eine Rückwärtsverschiebung ist.

3. Fahrzeug (1) nach Anspruch 1 oder 2, wobei die ersten und zweiten Lenkelemente (12A, 12B) jeweils eine erste und eine zweite Lenkerhälfte (12A, 12B) umfassen, die drehbar mit dem Stützelement (11) verbunden sind.

4. Fahrzeug (1) nach Anspruch 3, wobei der Mechanismus (20) ein erstes und ein zweites Gelenkviereck (30A, 30B) umfasst, die jeweils mit der ersten und zweiten Lenkerhälfte (12A, 12B) verbunden sind.

5. Fahrzeug (1) nach Anspruch 4, wobei das erste Gelenkviereck (30A) einen ersten Kipphebel (22), der konfiguriert ist, um mit der Lenksäule (2) verbindbar zu sein, einen zweiten Kipphebel (23A), der starr mit dem ersten Halblenker (12A) verbunden ist, und eine Verbindungsstange (24A) umfasst, die mit dem ersten Kipphebel (22) und dem zweiten Kipphebel (23A) verbunden ist, wobei der erste Kipphebel (22) und der zweite Kipphebel (23A) auch über das Trägerelement (11) miteinander verbunden sind, und wobei das zweite Gelenkviereck (30B) den ersten Kipphebel (22), einen zweiten Kipphebel (22B), der starr mit der zweiten Lenkerhälfte (12B) verbunden ist, und eine Verbindungsstange (24B) umfasst, die mit dem ersten Kipphebel (22) und dem zweiten Kipphebel (23B) des zweiten Gelenkvierecks (30B) verbunden ist, wobei der erste Kipphebel (22) und der zweite Kipphebel (23B) des zweiten Gelenkvierecks (30B) ebenfalls über das Trägerelement (11) miteinander verbunden sind.

6. Fahrzeug (1) nach Anspruch 5, wobei die zweiten Kipphebel (23A, 23B) im Vergleich zu dem ersten Kipphebel (22) eine andere Länge aufweisen.

7. Fahrzeug (1) nach Anspruch 6, wobei die zweiten Kipphebel (23A, 23B) länger sind als der erste Kipphebel (22).

8. Fahrzeug (1) nach Anspruch 6 oder 7, wobei die Verbindungsstangen (24A, 24B) des ersten und zweiten Gelenkvierecks (30A, 30B) über Kugelgelenke (25, 26A, 26B) mit dem ersten Kopphebel (22) und dem jeweiligen zweiten Kipphebel (23A, 23B) verbunden sind.

9. Fahrzeug (1) nach einem der Ansprüche 6 bis 8, wobei die Verbindungsstangen (24A, 24B) des ersten und zweiten Gelenkvierecks (30A, 30B) an einem gleichen Punkt (25) mit dem ersten Kipphebel (22) verbunden sind.

10. Fahrzeug (1) nach einem der Ansprüche 6 bis 8, wobei die Verbindungsstangen (24A, 24B) des ersten und zweiten Gelenkvierecks (130A, 130B) an zwei unterschiedlichen Punkten (25A, 25B) mit dem ersten Kipphebel (122) verbunden sind.

11. Fahrzeug (1) nach einem der Ansprüche 5 bis 10, wobei der Mechanismus (120) eine Untersetzungseinheit (40) umfasst, die dazu ausgebildet ist, die Bewegung des ersten Kipphebels (122) auf die Lenksäule (2) zu übertragen.

12. Fahrzeug (1) nach einem der vorhergehenden Ansprüche, wobei die Lenkelemente (12A, 12B) über jeweilige Gelenke (27A, 27B) mit dem Trägerelement (11) verbunden sind und der Übertragungsmechanismus konfiguriert ist, um eine unterschiedliche Drehung des ersten Lenkelements (12A) in Bezug auf das zweite Lenkelement (12B) um die Achsen der jeweiligen Gelenke (27A, 27B) zu bewirken.

13. Fahrzeug (1) nach einem der vorhergehenden Ansprüche, wobei das Trägerelement (11) am Rahmen (1A) des Fahrzeugs (1) befestigt ist.

## Revendications

1. Véhicule (1) comprenant un châssis (1A), une roue directrice (3) avant et une paire de roues arrière (4), comportant un système d'entraînement/propulsion comportant un moteur à combustion interne ou comportant un système d'entraînement/propulsion électrique ou hybride, ledit véhicule (1) comprenant un ensemble de direction (10) ayant une colonne de direction (2), ledit ensemble de direction (10) comprenant :
- un élément de support (11),
- un premier et un second organe de direction (12A, 12B), chacun relié individuellement et de manière mobile à l'élément de support (11), lesdits premier et second organes de direction (12A, 12B) comprenant respectivement une première et une seconde partie de poignée (13A, 13B) ;
- un mécanisme de transmission (20) interposé de manière fonctionnelle entre le premier et le second organe de direction (12A, 12B) et conçu pour être relié à la colonne de direction (2), dans lequel le mécanisme de transmission (20) est conçu de manière à imposer une loi de mouvement différente aux premier et second organes de direction (12A, 12B), respectivement, dans lequel, à la suite d'un premier déplacement (S1F) de la première partie de poignée (13A) vers un premier côté (L1) de l'ensemble de direction (10), ledit mécanisme de transmission (20) impose un second déplacement (S2B) de la seconde partie de poignée (13B) vers un second côté (L2) de l'ensemble de direction (10) opposé audit premier côté (L1), et inversement, à la suite d'un premier déplacement (S2F) de la seconde partie de poignée (13B) vers ledit premier côté (L1) de l'ensemble de direction (10), ledit mécanisme de transmission (20) impose un second déplacement (S1B) de la première partie de poignée (13A) vers ledit second côté (L2), dans lequel les premiers déplacements (S1F, S2F) sont supérieurs auxdits seconds déplacements (S1B, S2B).

2. Véhicule (1) selon la revendication 1, dans lequel, par rapport au sens de déplacement vers l'avant (F1) du véhicule, chaque premier déplacement (S1F, S2F) est un déplacement vers l'avant et chaque second déplacement (S1B, S2B) est un déplacement vers l'arrière.

3. Véhicule (1) selon la revendication 1 ou 2, dans lequel lesdits premier et second organes de direction (12A, 12B) comprennent respectivement un premier et un second demi-guidon (12A, 12B) reliés en rotation audit élément de support (11).

4. Véhicule (1) selon la revendication 3, dans lequel ledit mécanisme (20) comprend un premier et un second quadrilatère (30A, 30B) articulé reliés respectivement au premier et au second demi-guidon (12A, 12B).

5. Véhicule (1) selon la revendication 4, dans lequel le premier quadrilatère (30A) articulé comprend un premier balancier (22) conçu pour pouvoir être relié à la colonne de direction (2), un second balancier (23A) relié rigidement au premier demi-guidon (12A) et une bielle (24A) reliée au premier balancier (22) et audit second balancier (23A), le premier balancier (22) et ledit second balancier (23A) étant également reliés l'un à l'autre par l'intermédiaire de l'élément de support (11), et dans lequel le second quadrilatère (30B) articulé comprend ledit premier balancier (22), un second balancier (22B) relié rigidement au second demi-guidon (12B) et une bielle (24B) reliée au premier balancier (22) et au second balancier (23B) dudit second quadrilatère (30B) articulé, le premier balancier (22) et ledit second balancier (23B) dudit second quadrilatère (30B) articulé étant également reliés l'un à l'autre par l'intermédiaire de l'élément de support (11).

6. Véhicule (1) selon la revendication 5, dans lequel lesdits seconds balanciers (23A, 23B) présentent une longueur différente par comparaison audit premier balancier (22).

7. Véhicule (1) selon la revendication 6, dans lequel la longueur desdits seconds balanciers (23A, 23B) est supérieure à la longueur dudit premier balancier (22).

8. Véhicule (1) selon la revendication 6 ou 7, dans lequel les bielles (24A, 24B) des premier et second quadrilatères (30A, 30B) articulés sont reliées au premier balancier (22) et au second balancier (23A, 23B) respectif par l'intermédiaire de joints (25, 26A, 26B) sphériques.

9. Véhicule (1) selon l'une quelconque des revendications 6 à 8, dans lequel les bielles (24A, 24B) desdits premier et second quadrilatères (30A, 30B) articulés sont reliées au premier balancier (22) en un même point (25).

10. Véhicule (1) selon l'une quelconque des revendications 6 à 8, dans lequel les bielles (24A, 24B) desdits premier et second quadrilatères (130A, 130B) articulés sont reliées au premier balancier (122) en deux points (25A, 25B) distincts.

11. Véhicule (1) selon l'une quelconque des revendications 5 à 10, dans lequel ledit mécanisme (120) comprend une unité réductrice (40) conçue pour transmettre le mouvement du premier balancier (122) à ladite colonne de direction (2).

12. Véhicule (1) selon l'une quelconque des revendications précédentes, dans lequel lesdits organes de direction (12A, 12B) sont reliés à l'élément de support (11) par l'intermédiaire de charnières (27A, 27B) respectives et le mécanisme de transmission est conçu de manière à imposer une rotation différente du premier organe de direction (12A) par rapport au second organe de direction (12B) autour des axes des charnières (27A, 27B) respectives.

13. Véhicule (1) selon l'une quelconque des revendications précédentes, dans lequel l'élément de support (11) est fixé au châssis (1A) du véhicule (1).
